# EUROPÄISCHE PATENTSCHRIFT

(11) **EP 0 430 341 B1**
(45) Veröffentlichungstag und Bekanntmachung des Hinweises auf die Patenterteilung: **07.02.1996**
(21) Anmeldenummer: 90203052.7
(22) Anmeldetag: 19.11.1990
(51) Int. Cl.: G11B 20/00, G11B 27/00, G11B 20/10

(54) **Verfahren zum zeitverschachtelten Verarbeiten von Datenwörtern und Anordnung zur Durchführung dieses Verfahrens**
Method for time-interleaved processing of data words and apparatus for using it
Méthode pour le traitement par entrelacement de temps des mots de données et dispositif pour sa mise en oeuvre

(30) Priorität: 25.11.1989 DE 3939072
(43) Veröffentlichungstag der Anmeldung: 05.06.1991
(73) Patentinhaber: Philips Patentverwaltung GmbH, D-22335 Hamburg (DE); Philips Electronics N.V., NL-5621 BA Eindhoven (NL)
(72) Erfinder: Anders, Peter, Dr., W-2000 Hamburg 61 (DE)
(74) Vertreter: Poddig, Dieter, Dipl.-Ing.

(56) Entgegenhaltungen:
- EP-A- 0 046 231
- EP-A- 0 085 517
- EP-A- 0 138 246
- FR-A- 2 397 037

## Beschreibung

"Verfahren zum zeitverschachtelten Verarbeiten von Datenwörtern und Anordnung zur Durchführung dieses Verfahrens"

Die Erfindung betrifft ein Verfahren zum zeitverschachtelten Verarbeiten von einer Folge von mit einer vorgegebenen konstanten ersten Frequenz eintreffenden ersten Datenwörtern und von mit geringerer zweiter Frequenz eintreffenden zweiten Datenwörtern, wobei die Verarbeitung jedes ersten Datenwortes eine geringere Zeitdauer in Anspruch nimmt als der Kehrwert der vorgegebenen ersten Frequenz, sowie eine Anordnung zur Durchführung dieses Verfahrens.

Ein derartiges Verfahren wird insbesondere mit Signalprozessoren durchgeführt, die als Datenwörter digitalisierte Abtastwerte von analogen Signalquellen oder bereits gleich digital vorliegende Abtastwerte von Signalen verarbeiten, die zeitabhängig sind, wobei die einzelnen Abtastwerte desselben Signals bzw. derselben Signalquelle jeweils nach demselben Programm verarbeitet werden. Ein besonderer Anwendungsfall hierfür ist die Verarbeitung von digitalisierten Audiosignalen beispielsweise von dem derzeit verbreiteten Speichermedium Compakt-Disc CD. Da im Signalprozessor jeder dieser Signalwerte dem gleichen Algorithmus in Form eines Anwenderprogrammes unterworfen wird, stellt die Anzahl der ausführbaren Instruktionen innerhalb einer Abtastperiode und der Umfang der Instruktionen selbst ein Maß für die Leistungsfähigkeit des benutzten digitalen Signalprozessors dar.

Bei diesem Anwendungsfall gibt es neben Primärfunktionen, wie z.B. Lautstärke-, Balance- sowie Höhen- und Tiefeneinstellungen, die in einem sich mit der Abtastfrequenz von z.B. 44,1 kHz bei der CD wiederholenden Vordergrundprogramm im Signalprozessor durchgeführt werden, in Audiosystemen weitere Funktionen, die autgrund ihrer verminderten zeitlichen Anforderungen als Sekundärfunktionen bezeichnet werden können. Die Anderungsgeschwindigkeit der Signale bei diesen Sekundärfunktionen ist dabei wesentlich geringer als bei den Primärfunktionen, so daß es möglich ist, diese in zeitlichen Lücken durchzuführen, die bei der Durchführung eines Vordergrundprogramms für eine Primärfunktion innerhalb bzw. am Ende einer Abtastperiode verbleibt. Ein Beispiel für solche Sekundärfunktionen sind Maßnahmen zur Dekodierung von Stereo/Mono-Umschaltungen bzw. von Senderkennungen in Audiosystemen.

Um Hintergrundprogramme ausführen zu können, ist es also notwendig, daß die Abtastperiodendauer nicht vollständig durch Instruktionen des Vordergrundprogramms belegt ist. Da innerhalb der Abtastperiodendauer der Platz für das Hintergrundprogramm allgemein begrenzt ist, muß das Hintergrundprogramm in eine entsprechende Anzahl geeigneter Teilprogramme zerlegt werden, wobei dann in aufeinanderfolgenden Abtastperioden nach jedem Vordergrundprogramm ein solches Teilprogramm abgearbeitet wird. Dabei erfolgt dann am Ende jedes Vordergrundprogramms ein programmierter Sprung in das entsprechende Teilprogramm des Hintergrundprogramms, und der Rücksprung zum Anfang des folgenden Vordergrundprogramms wird häufig durch ein entsprechendes Synchronisationssignal gesteuert, so daß am Ende eines Hintergrund-Teilprogramms eine Warteschleife vorgesehen ist, um auf dieses Synchronisationssignal zu warten.

Dadurch ist bereits eine ungünstige zeitliche Ausnutzung des Signalprozessors vorgegeben. Hinzu kommt, daß bei jedem Programmsprung für die Verwaltung insbesondere der Sprungadressen eine Anzahl Befehle vorgesehen sein müssen, die Programmausführungszeit kosten, die sich relativ vergrößert, je kleiner die Hintergrund-Teilprogramme sind.

Aufgabe der Erfindung ist es, ein Verfahren der eingangs genannten Art anzugeben, bei dem die nach der Verarbeitung eines ersten Datenworts innerhalb der konstanten Abtastperiodendauer verbleibende Zeit möglichst weitgehend für die Verarbeitung mindestens eines weiteren Datenworts verwenden werden kann.

Diese Aufgabe wird erfindungsgemäß dadurch gelöst, daß jeweils eine vorgegebene erste Anzahl der ersten Datenwörter zwischengespeichert wird, daß während einer Anzahl direkt aufeinanderfolgender Datenwörter jeweils ein zwischengespeichertes Datenwort unmittelbar nach Abschluß der Verarbeitung des jeweils vorhergehenden Datenwortes verarbeitet wird, solange nach der Verarbeitung eines Datenworts ein noch nicht verarbeitetes zwischengespeichertes Datenwort vorhanden ist, und daß anderenfalls mindestens ein zweites Datenwort während einer vorgegebenen maximalen zusammenhängenden Zeitdauer, die kürzer ist als der Kehrwert der vorgegebenen ersten Frequenz, verarbeitet wird und danach automatisch die Verarbeitung der ersten Datenwörter wieder aufgenommen wird.

Auf diese Weise wird die innerhalb der Periodendauer für die Ausführung des Programms für ein erstes Datenwort verbleibende Zeit über mehrere Periodendauern summiert, bis kein unverarbeitetes zwischengespeichertes Datenwort mehr vorhanden ist, so daß nun eine zusammenhängende Zeit zur Verfügung steht, die für die Verarbeitung mindestens eines zweiten Datenworts verwendet werden kann.

Die Dauer der zusammenhängenden Zeit wird durch die Anzahl der zwischengespeicherten Datenwörter bestimmt und muß nicht vollständig
ausgenutzt werden, sondern wenn die Verarbeitung des zweiten Datenwortes bzw. aller zweier Datenwörter beendet ist, müssen keine Wartezyklen eingelegt werden, sondern es können unmittelbar die nächsten wieder zwischengespeicherten ersten Datenwörter wieder aufeinanderfolgen verarbeitet werden. Da im allgemeinen aber nur wenige zweite Datenwörter, häufig jeweils nur ein zweites Datenwort, zu verarbeiten ist und dieses Verarbeitungsprogramm allgemein nicht viel Zeit in Anspruch nimmt, ist es nach einer Ausgestaltung der Erfindung zweckmäßig, daß die erste Anzahl eins beträgt und beim Speichern eines neuen Datenwortes das vorhergehende Datenwort überschrieben wird und daß die Dauer der zusammenhängenden Zeit höchstens gleich dem Kehrwert der vorgegebenen Frequenz ist. Diese Dauer ist insesondere im Fall der Audiosignalverarbeitung praktisch immer ausreichend und erfordert nur wenig Speicheraufwand.

Eine Anordnung zur Durchführung des erfindungsgemäßen Verfahrens mit einem programmgesteuerten Signalprozessor ist im Anspruch 3 gekennzeichnet. Bei einer derartigen Anordnung ist also nur ein Speicher erforderlich, während die Steuerung und insbesondere die Umschaltung von der Verarbeitung der ersten Datenwörter auf ein zweites Datenwort direkt durch den Signalprozessor erfolgt, wobei diesem das Einschreiben jeweils eines ersten Datenwortes in den ersten Speicher signalisiert wird.

Aus der EP-O 138 246-A3 ist eine Anordnung bekannt, die ebenfalls erste Datenwörter, die häufig auftreten, und zweite Datenwörter verarbeitet, die weniger häufig auftreten. Die ersten Datenwörter werden mit einem Datentakt, der von der Datenquelle abgeleitet ist, in einem Speicher zwischengespeichert und mit einem weiteren, streng periodischen Takt ausgelesen, um Zeitbasisschwankungen auszugleichen, und in einer Steueranordnung zur Fehlerkorrektur verarbeitet. Die weniger häufig auftretenden Datenwörter, die von derselben Datenquelle kommen, werden von den ersten Datenwörtern getrennt und dann in einem weiteren Speicher zwischengespeichert und von einer anderen Steueranordnung verarbeitet.

Da das Verarbeiten der ersten Datenwörter nun asynchron zu deren Eintreffzeitpunkt vorgenommen wird, werden die verarbeiteten Datenwörter am Datenanschluß des Signalprozessors normalerweise ebenfalls asynchron zu den ankommenden Datenwörtern abgegeben, wenn nicht im Signalprozessor eine entsprechende variable Zeitverschiebung bei der Ausgabe der verarbeiteten Datenwörter programmiert wird. Da dies jedoch einen zusätzlichen Programm- und Zeitaufwand erfordert, ist eine Ausgestaltung der erfindungsgemäßen Anordnung dadurch gekennzeichnet, daß ein zweiter Speicher vorgesehen ist, wobei ein Eingang dieses zweiten Speichers über einen von einem Einschreibsignal des Signalprozessors gesteuerten dritten Schalter mit dem Datenanschluß des Signalprozessors verbindbar ist und an einem Ausgang des zweiten Speichers die verarbeiteten Datenwörter in gleichen Zeitabständen entsprechend dem Datenworttakt abnehmbar sind. Dieser zweite Speicher entspricht weitgehend dem ersten Speicher, wodurch insgesamt eine symmetrische Anordnung erhalten wird, in der die Kapazität des zweiten Speichers der des ersten Speichers entspricht.

Die Kapazität der Speicher kann entsprechend der gewünschten zusammenhängenden Zeit gewählt werden. Eine zweckmäßige Ausgestaltung der erfindungsgemäßen Anordnung zur Durchführung der Ausgestaltung des erfindungsgemäßen Verfahrens ist dadurch gekennzeichnet, daß wenigstens der erste Speicher nur jeweils ein Datenwort speichert und beim Speichern eines neuen Datenwortes das alte Datenwort überschreibt. Dies ergibt allgemein eine ausreichende Zeitdauer für die Verarbeitung mindestens eines zweiten Datenwortes und erfordert kleine Speicher mit sehr einfacher Steuerung.

Bei verschiedenen Anwendungen, insbesondere bei der Verarbeitung von digitalen Audiodaten von einer CD, werden die Datenwörter bitseriell mit einem Datenbittakt übertragen. Eine weitere Ausgestaltung der Erfindung ist dafür dadurch gekennzeichnet, daß dem ersten Speicher ein Serien-Parallel-Wandler vorgeschaltet ist, der die Datenbits nacheinander mit dem Datenbittakt aufnimmt und nach Empfang der Datenbits jeweils eines Datenworts dieses Datenwort parallel an den ersten Speicher abgibt und aus dem Datenbittakt den Datenworttakt erzeugt. Der Ausgang des Serien-Parallel-Wandlers stellt dann die Quelle der parallelen Datenwörter dar. In entsprechender Weise kann, wenn ein zweiter Speicher vorgesehen ist, diesem ein Parallel-Serien-Wandler nachgeschaltet werden, so daß schließlich wieder die Datenwörter bitseriell abgegeben werden.

Bei der Anwendung der erfindungsgemäßen Anordnung für die digitale Audiosignalverarbeitung wird allgemein von stereophonen Audiosignalen ausgegangen, wobei die Datenwörter Abtastwerte eines stereophonen Audiosignals sind und aus je zwei Datenteilwörtern bestehen, wobei jeweils zwei aufeinanderfolgende Datenteilwörter einander entsprechende Abtastwerte der beiden stereophonen Kanäle darstellen. Um diese zusammengehörigen Datenteilwörter jeweils auch etwa gleichzeitig zu verarbeiten, ist eine weitere Ausgestaltung der erfindungsgemäßen Anordnung dadurch gekennzeichnet, daß wenigstens der erste Speicher aus zwei Teilspeichern für je ein Datenteilwort besteht, wobei dem einen Teilspeicher ein Zwischenspeicher vorgeschaltet ist, daß abwechselnd bei jedem zweiten Datenteilwort ein erster und ein zweiter Datenteilworttakt auftritt, und daß beim ersten Datenteilworttakt der erste Zwischenspeicher ein Datenteilwort einschreibt und beim zweiten Datenteilworttakt beide ersten Teil speicher ein Datenteilwort gleichzeitig einschreiben. Auf diese Weise stehen beide Datenteilwörter parallel zur Verfügung und können vom Signalprozessor mit unmittelbar aufeinanderfolgenden Befehlen übernommen werden. Zweckmäßig ist es, bei Verwendung eines zweiten Speichers auf der Ausgangsseite diesen in entsprechender Weise aufzubauen.

Ausführungsbeispiele der Erfindung werden nachstehend anhand der Zeichnung erläutert. Es zeigen
- Fig. 1: ein Zeitdiagramm zur Erläuterung des erfindungsgemäßen Verfahrens,
- Fig. 2: ein Blockschaltbild einer erfindungsgemäßen Anordnung mit eingangsseitigem und ausgangsseitigem Speicher.

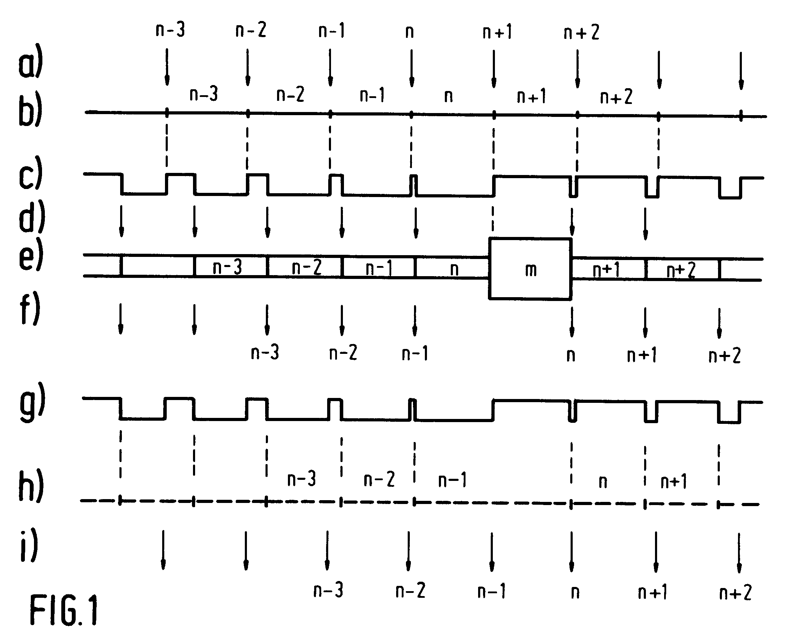

In Fig. 1 ist der Ablauf der Verarbeitung einer Anzahl aufeinanderfolgender erster Datenwörter n-3 bis n+2 sowie eines zweiten Datenwortes m dargestellt. Die Zeile a) bezeichnet mit den Pfeilen die Zeitpunkte, zu denen die ersten Datenwörter eintreffen, sowie deren Nummer, die hier auf ein willkürlich mit n bezeichnetes Datenwort bezogen sind.

Die Zeile b) gibt den Inhalt eines Zwischenspeichers an, der die zugeführten Datenwörter aufnimmt und zwischenspeichert. Dabei wird davon ausgegangen, daß hier nur ein Datenwort zwischengespeichert wird, das durch das folgende zugeführte Datenwort jeweils überschrieben wird.

In der Zeile c) ist die Zeitspanne zwischen dem Einschreiben eines Datenwortes in dem Zwischenspeicher und dem Auslesen und Zuführen dieses Datenwortes angedeutet, wobei die Auslesezeitpunkte durch die Pfeile in der Zeile d) angegeben sind. Die Zeile c) zeigt außerdem den Inhalt eines Markierspeichers innerhalb der Verarbeitungsanordnung, der mit jedem Zwischenspeichern eines neuen ersten Datenwortes gesetzt und der beim Übernehmen dieses Datenwortes zur Verarbeitung zurückgesetzt wird. Wie aus der Fig. 1 hervorgeht, ist der Abstand zwischen zwei aufeinanderfolgenden Auslesezeitpunkten kürzer als der Abstand zwischen dem Eintreffen zweier aufeinanderfolgender Datenwörter. Dadurch wird der Abstand zwischen dem Einschreiben und dem Auslesen des Zwischenspeichers bei aufeinanderfolgenden Datenwörtern immer kürzer bis zum Datenwort n.

Die aneinanderschließenden Blöcke in der Zeile e) sollen je die Verarbeitung eines Datenwortes symbolisieren, wobei die Bezeichnung in den Blöcken das Datenwort angibt, das während dieser Zeit verarbeitet wird. Dabei ist zu erkennen, daß am Ende der Verarbeitung des Datenwortes n das folgende Datenwort n+1 noch nicht eingetroffen ist, so daß nun auf die Verarbeitung eines zweiten Datenwortes m umgeschaltet wird. Hierfür steht eine Verarbeitungszeitdauer von maximal der Periodendauer der ersten Datenwörter zur Verfügung, denn wenn die Verarbeitung des Datenwortes n unmittelbar vor dem Eintreffen des folgenden Datenwortes n+1 beendet ist, bleibt dieses letztere zwar im Zwischenspeicher erhalten, jedoch nur bis zum Eintreffen des folgenden Datenwortes n+2, so daß es mindestens unmittelbar vorher ausgelesen und in die Verarbeitung übernommen werden muß. Dies ist in den Zeilen c) und d) dargestellt, wo das Datenwort n+1 ausgelesen und unmittelbar danach das folgende Datenwort n+2 eingeschrieben wird. Die Zeitdauer des Verarbeitungsblocks m ist durch die Anzahl und die Art der darin ablaufenden Befehle festgelegt. Aus der Zeichnung ist zu erkennen, daß die Zeitdauer des Verarbeitungsblocks m ohne weiteres auch kürzer sein kann. In diesem Falle würde der nächste Verarbeitungsblock zur Verarbeitung eines zweiten Datenwortes dann nach einer geringeren Anzahl von ersten Datenwörtern wieder auftreten.

Auf diese Weise wird die Differenz zwischen der Periodendauer der ersten Wörter und der Verarbeitungsdauer bei aufeinanderfolgenden Datenwörtern akkumuliert, so daß schließlich ein zusammenhängender Verarbeitungsblock für ein zweites Datenwort entsteht, wobei allerdings das Eintreffen der ersten Datenwörter und deren Verarbeitung asynchron zueinander verläuft. Dieser asynchrone Ablauf wird jedoch durch Verwendung der Zwischenspeicherung möglich. Die zusammenhängende Zeitdauer für die Verarbeitung eines zweiten Datenwortes ermöglicht also eine sehr effektive Durchführung dieser Verarbeitung mit geringem Verwaltungsaufwand, da die Verarbeitung von solchen zweiten Datenwörtern allgemein kurz ist und innerhalb der Periodendauer der ersten Datenwörter abgeschlossen werden kann. Anderenfalls muß die Verarbeitung abgebrochen und beim nächsten zusammenhängenden Zeitraum für die Verarbeitung eines zweiten Datenwortes fortgesetzt werden, wobei der dann erforderliche Verwaltungsaufwand jedoch nur gering im Verhältnis zur gesamten zur Verfügung stehenden Dauer eines Verarbeitungsblocks für ein zweites Datenwort ist.

Jeweils am Ende der Verarbeitung eines ersten Datenwortes wird das verarbeitete Datenwort abgegeben, wie aus der Zeile f) in Fig. 1 hervorgeht. Daraus ist auch zu erkennen, daß die Abstände zwischen den verarbeiteten Datenwörtern zum einen nicht konstant und zum anderen auch kürzer sind als die Zeitabstände der eintreffenden ersten Datenwörter. Außerdem ist es häufig erwünscht, daß die verarbeiteten Datenwörter synchron mit den zugeführten Datenwörtern auftreten, lediglich eine konstante Verschiebung um ein oder mehrere ganze Datenwörter ist zulässig.

Dies wird durch Verwendung einer ausgangsseitigen Zwischenspeicherung für die verarbeiteten ersten Datenwörter, die gemäß den Zeitpunkten in Zeile f) in Fig. 1 auftreten, erreicht.

Die Zeile h) zeigt den Inhalt dieses Zwischenspeichers. Jeweils zu einem in Zeile f) angegebenen Zeitpunkt wird ein verarbeitetes Datenwort eingeschrieben, und synchron mit den Zeitpunkten, zu denen die zu verarbeitenden ersten Datenwörter eintreffen, werden die ausgangsseitig zwischengespeicherten verarbeiteten ersten Datenwörter ausgegeben, wie in Zeile i) angegeben ist.

Der Signalverlauf in Zeile g) zeigt den Zeitabstand zwischen dem Auslesen des ausgangsseitigen Zwischenspeichers und dem darauffolgenden Einschreiben des folgenden verarbeiteten Datenwortes und stellt gleichzeitig den Zustand eines ausgangsseitigen Markierspeichers bei der Verarbeitung dar, der bei jedem Auslesen bzw. Abgeben eines verarbeiteten Datenwortes aus dem Zwischenspeicher gesetzt und beim Einschreiben des nächsten verarbeiteten Datenwortes zurückgesetzt wird. Ein neues Datenwort kann also nur eingeschrieben werden, wenn dieses Signal hoch ist. Am Ende der Verarbeitung des Datenwortes n in Zeile e) ist das Signal in Zeile g) jedoch noch niedrig, so daß das verarbeitete Datenwort n noch nicht unmittelbar ausgegeben werden kann, sondern dies erfolgt erst am Ende des Verarbeitungsblocks m. Dies kann auf einfache Weise bei der Verarbeitung dadurch erreicht werden, daß ein Verarbeitungsblock für jeweils ein erstes Datenwort nicht mit dem Einlesen des neuen Datenwortes, sondern mit der Ausgabe des zuletzt verarbeiteten Datenwortes beginnt. Damit wird also das verarbeitete Datenwort n erst am Ende des Verarbeitungsblocks m ausgegeben, wie aus Zeile f) hervorgeht.

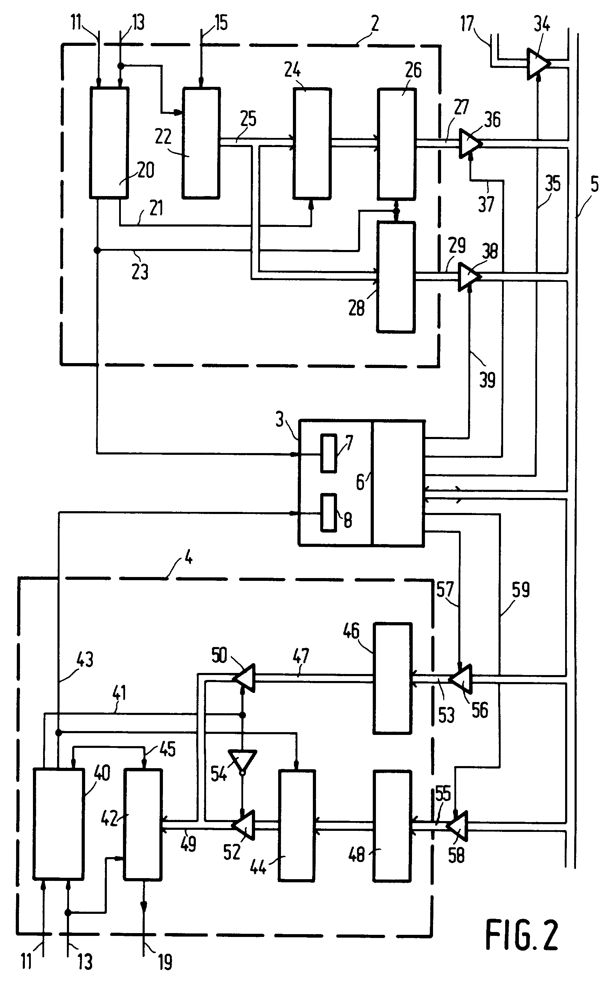

Die Fig. 2 zeigt das Blockschaltbild einer Anordnung zur Verarbeitung von digitalen stereophonen Audiosignalen, die seriell zugeführt bzw. abgegeben werden, und zur Verarbeitung weiterer Datenwörter. Diese Anordnung umfaßt im wesentlichen einen Eingangsteil 2 zur Serien-Parallel-Wandlung und Zwischenspeicherung von Datenwörtern, einen symbolisch dargestellten Signalprozessor 3 sowie einen Ausgangsteil 4 mit einem Zwischenspeicher und einem Parallel-Serien-Wandler. Diese drei Teile sind über einen Datenbus 5 mittels steuerbarer Schalter 36 und 38 bzw. 56 und 58 miteinander verbunden, und außerdem ist ein Eingang 17 für zweite Datenwörter über einen Schalter 34 mit dem Datenbus 5 verbindbar. Die zu verarbeitenden Datenwörter werden bitseriell über einen Eingang 15 zusammen mit einem Bittakt über die Leitung 13 zugeführt und mit diesem Bittakt in ein Eingangs-Schieberegister 22 seriell eingeschrieben. Jeweils eine vorgegebene Anzahl aufeinanderfolgender Bits (im allgemeinen 16 Bits entsprechend 2 Byte) bilden ein Datenteilwort und stellen einen Abtastwert eines der beiden Audiokanäle dar, und zwei aufeinanderfolge Datenteilwörter stellen die zusammengehörigen zeitgleichen Abtastwerte beider Audiokanäle dar. Durch ein Kanalsteuersignal auf der Leitung 11 wird angegeben, zu welchem Kanal die gleichzeitig eintreffenden Datenbits bzw. die daraus gebildeten Datenteilwörter gehören.

Der Eingang 13 für das Bittaktsignal führt außer auf das Eingangsschieberegister 22 außerdem auf eine Eingangstaktsteuerung 20, die auch das Kanalsteuersignal über den Eingang 11 erhält und die am Ende jeder ein Datenteilwort bildenden Datenbitfolge ein Signal auf der Leitung 21 bzw. 23 erzeugt. Am Ende des ersten von zwei zusammengehörenden Datenteilwörtern wird ein Signal auf der Leitung 21 erzeugt, das einem Zwischenregister 24 zugeführt wird und die in diesem Augenblick im Eingangs-schieberegister 22 enthaltenen Datenbits des ersten Datenteilwortes über die Verbindung 25 parallel darin einschreibt. Am Ende des zweiten Datenteilwortes liegen dessen Bits parallel über die Verbindung 25 an einem Eingang eines Eingangsregisters 28 an, und gleichzeitig liegt aus dem Zwischenregister 24 das erste Datenteilwort parallel an einem Eingang eines weiteren Eingangsregisters 26 an, und mit einem Signal auf der Leitung 23 am Ende des zweiten Datenteilwortes werden beide Datenteilwörter in diese beiden Eingangsregister 26 und 28 übernommen. Deren Inhalt liegt dann parallel an den Ausgängen 27 und 29 vor.

Das Signal auf der Leitung 23 wird ferner über einen Steuereingang dem Signalprozessor 3 zugeführt und setzt dort einen Markierspeicher 7, um dem Signalprozessor 3 mitzuteilen, daß ein vollständiges Datenwort aus zwei Datenteilwörtern parallel zur Verfügung steht. Sobald der Signalprozessor 3 nun die Verarbeitung eines zusammengehörigen Paars von Datenteilwörtern abgeschlossen hat, führt er nacheinander über die Leitungen 37 und 39 den Schaltern 36 und 38 ein Auslesesignal zu, wodurch die Schalter nacheinander die Ausgänge 27 bzw. 29 mit dem Datenbus 5 verbinden, so daß der Signalprozessor unmittelbar aufeinanderfolgend die beiden Datenteilwörter einschreiben und dem Verarbeitungsprogramm zuführen kann.

Gleichzeitig wird dann der Markierspeicher 7 im Signalprozessor 3 gelöscht. Dieser Ablauf geht im Prinzip auch aus der Fig. 1, Zeilen a) bis e) hervor, wo die in Zeile a) angedeuteten Zeitpunkte angeben, wann die Signale auf der Leitung 23 in Fig. 2 gebildet werden.

Falls am Ende der Verarbeitung eines Paares von Datenteilwörtern der Markierspeicher 7 nicht gesetzt ist (dies ist in Fig. 1 am Ende der Verarbeitung des Datenwortes n der Fall), erzeugt der Signalprozessor ein Auslesesignal auf der Leitung 35, das den Schalter 34 ansteuert und den Eingang 17 mit dem Datenbus 5 verbindet, so daß über diesen Eingang 17 parallel ein zweites Datenwort in den Signalprozessor 3 übernommen und verarbeitet werden kann. Es ist jedoch auch möglich, ein zweites Datenwort seriell über einen entsprechenden gesonderten Eingang dem Signalprozessor 3 zuzuführen, und entsprechend kann ein verarbeitetes zweites Datenwort parallel über den Datenbus 5 oder seriell über einen gesonderten Ausgang abgegeben werden, was der Einfachheit halber nicht näher dargestellt ist.

Nach jeder Verarbeitung eines Paares von Datenteilwörtern gibt der Signalprozessor 3 diese beiden Datenteilwörter nacheinander über den Datenbus 5 aus und erzeugt je ein Einschreibsignal auf der Leitung 57 bzw. 59, die die Schalter 56 und 58 nacheinander ansteuern, so daß die beiden Datenteilwörter über die Eingänge 53 bzw. 55 in je ein Ausgangsregister 46 bzw. 48 eingeschrieben werden. Dies sind die in der Zeile f) in Fig. 1 angegebenen Zeitpunkte. Gleichzeitig wird im Signalprozessor 3 ein Ausgangsmarkierspeicher 8 zurückgesetzt.

Um die in den Ausgangsregistern 46 und 48 gespeicherten Datenteilwörter in einem Takt, der nicht synchron ist mit den Einschreibsignalen des Signalprozessors auf den Leitungen 57 und 59, bitseriell nacheinander an einem Datenausgang 19 abzugeben, ist ferner ein Ausgangszwischenregister 44, ein Parallel-Serien-Wandler 42 und eine Ausgangstaktsteuerung 40 vorgesehen. Die letztere empfängt ebenfalls den Datenbittakt über die Leitung 13 und das Kanalsteuersignal über die Leitung 11 und erzeugt daraus interne Steuersignale auf den Leitungen 41, 43 und 45. Dadurch wird erreicht, daß am Ausgang 19 die Datenbits der verarbeiteten Datenwörter synchron zu den am Eingang 15 eintreffenden Datenbits der zu verarbeitenden Datenwörter auftritt, wobei lediglich eine Verschiebung um eine ganze Anzahl von Datenwörtern bzw. Paaren von Datenteilwörtern stattgefunden hat.

Zu Beginn eines Paares von Datenteilwörtern, d.h. zu Beginn des ersten Datenteilwortes, wird auf den Leitungen 43 und 45 ein Signal erzeugt. Mit dem Signal auf der Leitung 43 wird das eine Datenteilwort aus dem Ausgangsregister 48 in das Ausgangszwischenregister 44 übernommen, und aus dem Ausgangsregister 46 wird das andere Datenteilwort über eine Verbindung 47 und einen Schalter 50, der durch ein entsprechendes Signal auf der Leitung 41 gerade durchlässig geschaltet ist, und über eine Verbindung 49 einem parallelen Eingang des als Parallel-Serien-Wandlers dienenden Ausgangsschieberegisters 42 mit dem Signal auf der Leitung 45 eingeschrieben. Danach wird dieses parallele Datenteilwort bitseriell durch den Datenbittakt am Eingang 13 seriell über den Ausgang 19 abgegeben.

Durch das Signal auf der Leitung 43 wird ferner der Ausgangsmarkierspeicher 8 im Signalprozessor 3 gesetzt, denn nun können die Ausgangsregister 46 und 48 erneut je ein Datenteilwort aufnehmen, da der vorherige Inhalt in das Ausgangszwischenregister 44 bzw. in das Ausgangsschieberegister 42 übernommen worden ist. Das Signal auf der Leitung 43 tritt also zu den in Fig. 1, Zeile i) angegebenen Zeitpunkten auf.

Am Ende des ersten Datenteilwortes wird erneut ein Signal auf der Leitung 45 erzeugt und außerdem das Signal auf der Leitung 41 umgeschaltet, so daß über den Inverter 54 nunmehr der Schalter 52 durchlässig geschaltet ist und das zweite Datenteilwort aus dem Ausgangszwischenregister 44 dem parallelen Eingang des Ausgangsschieberegisters 42 zugeführt und durch das Signal auf der Leitung 45 darin eingeschrieben wird. Nunmehr wird das zweite Datenteilwort mit dem Datenbittakt am Eingang 13 bitseriell über den Ausgang 19 ausgegeben.

Durch die Verwendung der Eingangsregister 26 und 28 ist es also möglich, bei der Verarbeitung von regelmäßig eintreffenden Datenwörtern die Zeitdifferenz zwischen der Periodendauer des Eintreffens dieser Datenwörter und deren Verarbeitungsdauer über aufeinanderfolgende Datenwörter zu akkumulieren, wobei das Eintreffen der Datenwörter und deren Verarbeitung asynchron zueinander erfolgt, so daß nach einer Anzahl von Datenwörtern, die von der genannten Zeitdifferenz abhängt, ein zusammenhängender Zeitraum für die Verarbeitung eines zweiten Datenwortes zur Verfügung steht. Die Verwendung der Zwischenregister 24 und 44 ist in diesem Beispiel lediglich erfolgt, weil es sich um die Verarbeitung von stereophonen digitalen Audiosignalen handelt. Es ist leicht einzusehen, daß insbesondere bei Verwendung mehrerer Eingangsregister entsprechend den Registern 26 und 28, die im Datenweg hintereinander geschaltet sein müßten und damit die Zwischenspeicherung mehrerer Datenwörter ermöglichen würden, ein längerer Verarbeitungsblock für ein bzw. mehrere zweite Datenwörter möglich ist.

## Patentansprüche

1. Verfahren zum zeitverschachtelten Verarbeiten von einer Folge von mit einer vorgegebenen konstanten ersten Frequenz eintreffenden ersten Datenwörtern und von mit geringerer zweiter Frequenz eintreffenden zweiten Datenwörtern, wobei die Verarbeitung jedes ersten Datenwortes eine geringere Zeitdauer in Anspruch nimmt als der Kehrwert der vorgegebenen ersten Frequenz, wobei jeweils eine vorgegebene erste Anzahl der ersten Datenwörter zwischengespeichert wird, daß während einer Anzahl direkt aufeinanderfolgender Datenwörter jeweils ein zwischengespeichertes Datenwort unmittelbar nach Abschluß der Verarbeitung des jeweils vorhergehenden Datenwortes verarbeitet wird, solange nach der Verarbeitung eines Datenworts ein noch nicht verarbeitetes zwischengespeichertes Datenwort vorhanden ist, und daß anderenfalls mindestens ein zweites Datenwort während einer vorgegebenen maximalen zusammenhängenden Zeitdauer, die kürzer ist als der Kehrwert der vorgegebenen ersten Frequenz, verarbeitet wird und danach automatisch die Verarbeitung der ersten Datenwörter wieder aufgenommen wird.

2. Verfahren nach Anspruch 1, wobei die erste Anzahl eins beträgt und beim Speichern eines neuen Datenwortes das vorhergehende Datenwort überschrieben wird und daß die Dauer der zusammenhängenden Zeit höchstens gleich dem Kehrwert der vorgegebenen Frequenz ist.

3. Anordnung zur Durchführung des Verfahrens nach Anspruch 1 oder 2 mit einem programmgesteuerten Signalprozessor mit einem Datenanschluß zum Empfangen von mit einem Datentakt vorgegebener konstanter erster Frequenz eintreffenden ersten Datenwörtern und von mit geringerer zweiter Frequenz eintreffenden zweiten Datenwörtern, wobei die Verarbeitung jedes ersten Datenwortes eine geringere Zeitdauer in Anspruch nimmt als der Kehrwert der vorgegebenen ersten Frequenz, und zum Abgeben von verarbeiteten Datenwörtern und mit Steueranschlüssen, wobei ferner ein erster Speicher (26, 28) für eine vorgegebene erste Anzahl Datenwörter vorhanden ist, von dem ein Eingang mit einem Eingang (25) für die ersten Datenwörter verbunden ist, um diese mit dem Datenworttakt (23) in den ersten Speicher (26, 28) einzuschreiben, und von dem ein Ausgang (27, 29) über einen von einem ersten Auslesesignal gesteuerten ersten Schalter (36, 38) mit dem Datenanschluß des Signalprozessors verbindbar ist, wobei der Signalprozessor (3) das erste Auslesesignal an einem der Steueranschlüsse (37, 39) unmittelbar nach Abschluß der Verarbeitung des jeweils vorhergehenden Datenwortes erzeugt, solange nach der Verarbeitung eines Datenwortes ein noch nicht verarbeitetes Datenwort im ersten Speicher (26, 28 ) vorhanden ist, und daß ein Eingang (17) für die zweiten Datenwörter über einen von einem zweiten Auslesesignal gesteuerten zweiten Schalter (34) mit dem Datenanschluß (5) des Signalprozessors (3) verbindbar ist, wobei der Signalprozessor (3) das zweite Auslesesignal an einem weiteren der Steueranschlüsse (35) erzeugt, wenn unmittelbar nach Abschluß der Verarbeitung eines ersten Datenwortes kein noch nicht verarbeitetes erstes Datenwort im ersten Speicher (26, 28) vorhanden ist, und spätestens nach einer Datentaktperiode wieder ein erstes Auslesesignal erzeugt.

4. Anordnung nach Anspruch 3, wobei ein zweiter Speicher (46, 48) vorgesehen ist, wobei ein Eingang (53, 55) dieses zweiten Speichers über einen von einem Einschreibsignal (57, 59) des Signalprozessors (3) gesteuerten dritten Schalter (56, 58) mit dem Datenanschluß (5) des Signalprozessors verbindbar ist und an einem Ausgang (49) des zweiten Speichers (46, 48) die verarbeiteten Datenwörter in gleichen Zeitabständen entsprechend dem Datworttakt (23) abnehmbar sind.

5. Anordnung nach Anspruch 3 oder 4, wobei wenigstens der erste Speicher (26, 28) nur jeweils ein Datenwort speichert und beim Speichern eines neuen Datenwortes das alte Datenwort überschreibt.

6. Anordnung nach einem der Ansprüche 3, 4 oder 5, bei der die Datenwörter mit einem Datenbittakt bitseriell eintreffen, wobei dem ersten Speicher (26, 28) ein Serien-Parallel-Wandler (20, 22) vorgeschaltet ist, der die Datenbits nacheinander mit dem Datenbittakt aufnimmt und nach Empfang der Datenbits jeweils eines Datenworts dieses Datenwort parallel an den ersten Speicher (26, 28) abgibt und aus dem Datenbittakt den Datenworttakt (23) erzeugt.

7. Anordnung nach einem der Ansprüche 3 bis 6, wobei die Datenwörter Abtastwerte eines stereophonen Audiosignals sind und aus je zwei Datenteilwörtern bestehen, wobei jeweils zwei aufeinanderfolgende Datenteilwörter einander entsprechende Abtastwerte der beiden stereophonen Kanäle darstellen, wobei wenigstens der erste Speicher aus zwei Teilspeichern (26, 28) für je ein Datenteilwort besteht, wobei dem einen Teilspeicher (26) ein Zwischenspeicher vorgeschaltet ist, daß abwechselnd bei jedem Datenteilwort ein erster und ein zweiter Datenteilworttakt auftritt, und daß beim ersten Datenteilworttakt der erste Zwischenspeicher (24) ein Datenteilwort einschreibt und beim zweiten Datenteilworttakt beide ersten Teilspeicher (26, 28) ein Datenteilwort gleichzeitig einschreiben.

## Claims

1. A method for the time-interleaved processing of a sequence of first data words which arrive with a predetermined constant frequency and of second data words which arrive with a lower frequency, the processing of each first data word requiring a period of time which is less than the reciprocal value of the predetermined first frequency, a predetermined first number of first data words always being temporarily stored, during a number of directly successive data words each time a temporarily stored data word being processed immediately after the processing of the respective preceding data word has been completed, as long as an as yet unprocessed, temporarily stored data word is available after the processing of a data word, otherwise at least one second data word being processed during a predetermined maximum contiguous time which is less than the reciprocal value of the predetermined first frequency, after which the processing of the first data words is resumed automatically.

2. A method as claimed in Claim 1, in which the first number is one and the preceding data word is overwritten when a new data word is stored, and in which the duration of the contiguous time is at most equal to the reciprocal value of the predetermined frequency.

3. An arrangement for carrying out the method claimed in Claim 1 or 2, comprising a program-controlled signal processor with a data terminal for receiving data words arriving with a data timing of predetermined, constant first frequency, and second data words arriving with a lower, second frequency, the processing of each first data word requiring a period of time which is less than the reciprocal value of the predetermined first frequency, and for supplying processed data words, and with control terminals, a first memory (26, 28) being provided for a predetermined first number of data words, an input thereof being connected to an input (25) for the first data words in order to write the latter into the first memory (26, 28) with the data word timing (23), and an output (27, 29) thereof being connectable to the data terminal of the signal processor via a first switch (36, 38) which is controlled by a first read signal, the signal processor (3) generating the first read signal on one of the control terminals (37, 39) immediately after completion of the processing of the respective preceding data word for as long as an as yet unprocessed data word is present in the first memory (26, 28), an input (17) for the second data words being connectable to the data terminal (5) of the signal processor (3) via a second switch (34) which is controlled by a second read signal, the signal processor (3) generating the second read signal on a further one of the control terminals (35) when immediately after completion of the processing of a first data word no as yet unprocessed first data word is present in the first memory (26, 28), and generating a first read signal again no later than after one data timing period.

4. An arrangement as claimed in Claim 3, in which a second memory (46, 48) is provided, an input (53, 55) of said second memory being connectable to the data terminal (5) of the signal processor via a third switch (56, 58) which is controlled by a write signal (57, 59) of the signal processor (3), and it being possible to derive the processed data words at equal intervals in accordance with the data word timing (23) from one output (49) of the second memory (46, 48).

5. An arrangement as claimed in Claim 3 or 4, in which at least the first memory (26, 28) each time stores only one data word and overwrites the old data word when a new data word is stored.

6. An arrangement as claimed in one of the Claims 3, 4 or 5, in which the data words arrive bit-serially with a data bit timing, the first memory (26, 28) being preceded by a serial-parallel converter (20, 22) which receives the data bits successively with the data bit timing and which, after reception of the data bits of each time one data word, outputs this data word in parallel form to the first memory (26, 28) and generates the data word timing (23) from the data bit timing.

7. An arrangement as claimed in any one of the Claims 3 to 6, in which the data words are sampling values of a stereophonic audio signal and consist of two data sub-words each two successive data sub-words then representing corresponding sampling values of the two stereophonic channels, at least the first memory consisting of two sub-memories (26, 28) for a respective data sub-word, an intermediate memory preceding one sub-memory (26), a first and a second data sub-word timing occurring alternately for each data sub-word, and with the first data sub-word timing the first intermediate memory (24) writing a data sub-word, and with the second data sub-word timing both first sub-memories (26, 28) simultaneously write a data sub-word.

## Revendications

1. Procédé de traitement par entrelacement dans le temps d'une suite de premiers mots de données arrivant à une première fréquence constante prédéterminée et d'une suite de deuxièmes mots de données arrivant à une deuxième fréquence moindre, le traitement de chaque premier mot de données prenant moins de temps que la valeur inverse de la première fréquence prédéterminée, étant entendu que, respectivement, un premier nombre prédéterminé des premiers mots de données est tamponné, que, pendant un nombre de mots de données directement, consécutifs, un mot de données tamponné est chaque fois traité directement au terme du traitement du mot de données le précédant respectivement, aussi longtemps qu'après le traitement d'un mot de données, un mot de données tamponné non encore traité soit présent et, que, par ailleurs, au moins un deuxième mot de données est traité au cours d'une période continue maximum prédéterminée, qui est plus courte que la valeur inverse de la première fréquence prédéterminée, et ensuite automatiquement le traitement des premiers mots de données est repris.

2. Procédé selon la revendication 1, dans lequel le premier nombre est de un et, lors de la mémorisation d'un nouveau mot de données, le mot de données précédent est écrasé et la durée du temps continu est au maximum égal à la valeur inverse de la fréquence prédéterminée.

3. Dispositif pour l'exécution du procédé selon la revendication 1 ou 2, avec un processeur de signaux commandé par programme ayant une connexion de données pour recevoir des premiers mots de données arrivant à une cadence de données d'une première fréquence constante prédéterminée et des deuxièmes mots de données arrivant à une deuxième fréquence moindre, le traitement de chaque premier mot de données durant une période inférieure à celle de la valeur inverse de la première fréquence prédéterminée, et pour délivrer des mots de données traités, et ayant des connexions de commande, une première mémoire (26, 28) étant par ailleurs prévue pour un premier nombre prédéterminé de mots de données, mémoire dont une entrée est reliée à une entrée (25) pour les premiers mots de données, en vue de les transcrire à la cadence de mots de données (23) dans la première mémoire (26, 28), et dont une sortie (27, 29) peut être reliée à la connexion de données du processeur de signaux via un premier commutateur (36, 38) commandé par un premier signal de lecture, le processeur de signaux (3) produisant le premier signal de lecture sur l'une des connexions de commande (37, 39) directement à la fin du traitement du mot de données respectivement précédent, aussi longtemps que, après le traitement d'un mot de données, un mot de données qui n'est pas encore traité est présent dans la première mémoire (26, 28), et une entrée (17) pour les deuxièmes mots de données peut être connectée via un deuxième commutateur (34) commandé par un deuxième signal de lecture à la connexion de données (5) du processeur de signaux (3), le processeur de signaux (3) produisant le deuxième signal de lecture sur une autre des connexions de commande (35) lorsque, directement à la fin du traitement d'un premier mot de données, aucun premier mot de données non encore traité n'est présent dans la première mémoire (26, 28), et produisant, à nouveau au plus tard après une période de cadence de données, un premier signal de lecture.

4. Dispositif selon la revendication 3, dans lequel une deuxième mémoire (46, 48), est prévue, une entrée (53, 55) de cette deuxième mémoire pouvant être reliée à la connexion de données (5) du processeur de signaux via un troisième commutateur (56, 58) commandé par un signal d'inscription (57, 59) du processeur de signaux (3) et les mots de données traités pouvant être obtenus à une sortie (49) de la deuxième mémoire (46, 48) à des intervalles de temps égaux correspondant à la cadence de mots de données (23).

5. Dispositif selon la revendication 3 ou 4, dans lequel au moins la première mémoire (26, 28) ne mémorise chaque fois qu'un mot de données et écrase l'ancien mot de données lorsqu'elle mémorise un nouveau mot de données.

6. Dispositif selon l'une quelconque des revendications 3, 4 ou 5, dans lequel les mots de données arrivent en série par bits à une cadence binaire de données, un convertisseur série-parallèle (20, 22) étant monté en amont de la première mémoire (26, 28), recevant successivement les bits de données à la cadence binaire et délivrant, après réception des bits de données respectifs d'un mot de données, ce mot de données en parallèle à la première mémoire, et produisant la cadence de mots de données (23) à partir de la cadence binaire de données.

7. Dispositif selon l'une quelconque des revendications 3 à 6, dans lequel les mots de données sont des valeurs d'échantillonnage d'un signal audiostéréophonique et sont constitués chacun de deux mots partiels de données, deux mots partiels de données consécutifs représentant chaque fois des valeurs d'échantillonnage réciproquement correspondantes des deux canaux stéréophoniques, étant entendu qu'au moins la première mémoire est constituée de deux mémoires partielles (26, 28) respectivement pour chaque mot partiel de données, une mémoire tampon étant montée en amont de la première mémoire partielle (26), qu'à chaque deuxième mot partiel de données, apparaît alternativement une première et une deuxième cadence de mots partiels de données et en ce que, à la première cadence de mots partiels de données, la première mémoire tampon (24) inscrit un mot partiel de données et, à la deuxième cadence de mots partiels de données, les deux premières mémoires partielles (26, 28) inscrivent simultanément un mot partiel de données.
